# EUROPEAN PATENT SPECIFICATION

(11) **EP 4 026 102 B1**
(45) Date of publication and mention of the grant of the patent: **14.02.2024**
(21) Application number: 20764415.4
(22) Date of filing: 04.09.2020
(51) Int. Cl.: G06T 11/00

(54) **CONFIDENCE MAP FOR NEURAL NETWORK BASED LIMITED ANGLE ARTIFACT REDUCTION IN CONE BEAM CT**
VERTRAUENSKARTE FÜR AUF NEURONALEM NETZ BASIERENDER BEGRENZTE WINKELARTEFAKTREDUKTION IN DER KEGELSTRAHL-CT
CARTE DE CONFIANCE POUR LA RÉDUCTION DES ARTÉFACTS À ANGLE LIMITÉ À BASE DE RÉSEAU NEURONAL EN TOMOGRAPHIE ASSISTÉE PAR ORDINATEUR À FAISCEAU CONIQUE

(30) Priority: 06.09.2019 EP 19195845
(43) Date of publication of application: 13.07.2022
(73) Proprietor: Koninklijke Philips N.V., 5656 AG Eindhoven (NL)
(72) Inventor: BRENDEL, Bernhard, Johannes, 5656 AE Eindhoven (NL); SCHAEFER, Dirk, 5656 AE Eindhoven (NL)
(74) Representative: Philips Intellectual Property & Standards
(86) International application number: PCT/EP2020/074762
(87) International publication number: WO 2021/043976

(56) References cited:
- US-A1- 2013 223 710
- ANIRUDH RUSHIL ET AL: "Lose the Views: Limited Angle CT Reconstruction via Implicit Sinogram Completion", 2018 IEEE/CVF CONFERENCE ON COMPUTER VISION AND PATTERN RECOGNITION, IEEE, 18 June 2018 (2018-06-18), pages 6343-6352, XP033473551, DOI: 10.1109/CVPR.2018.00664

## Description

### FIELD OF THE INVENTION

The invention relates to image processing systems, to image processing methods, to an imaging arrangement, to a computer program element and to a computer readable medium.

### BACKGROUND OF THE INVENTION

C-arm imaging systems are used for intra-operative X-ray imaging. In particular mobile C-arm systems as used for example in orthopedic interventions should have a slim design and a small footprint for easy handling during the intervention. These design constraints lead to compromises regarding the data acquisition capabilities of the system. For example, the angular range of rotations, e.g., of the C-arm is for some configurations below 180°.

If the angular range of a rotation is below 180° (plus fan angle), a CT-like acquisition is only possible with an incomplete trajectory. The incompleteness in angular direction leads in image reconstruction to so-called limited angle artifacts, which have a severe impact on the image quality.

An article "Lose the views: limited angle CT reconstruction via implicit sinogram completion" by Rushil Anirudh et al., Proceedings of the 2018 IEEE/CVF conference on computer vision and pattern recognition, pages 6343-6352 (XP033473551) describes to address the problem of artifact-laden reconstructions from limited angle sinograms in computed tomography (CT). A system of 1D and 2D convolutional neutral networks called "CTNet" is proposed operating directly on a limited angle sinogram to predict the reconstruction.

### SUMMARY OF THE INVENTION

There may therefore be a need for a system to support in particular limited angle tomography.

The object of the present invention is solved by the subject matter of the independent claims where further embodiments are incorporated in the dependent claims. It should be noted that the following described aspect of the invention equally applies to the image processing methods, the imaging arrangement, to the computer program element and to the computer readable medium.

According to a first aspect of the invention there is provided an image processing system (IPS), according to claim 1.

In preferred embodiments, the image processing system comprises a visualizer configured to cause the confidence map to be displayed on a display device.

In embodiments, the confidence map is displayed together with the input image.

In embodiments, the input image is previously computed by an estimator based on a reconstruction from the projection data.

In embodiments, the estimator is implemented by a machine learning algorithm, such as in a neural network architecture.

The confidence map is structured to allow distinguishing (eg visually) the discriminated border regions, for instance by color or grey value coding.

In an example, the confidence map marks portions in the image with low confidence, that is, those portions may be have been wrongly estimated because related portions of the anatomy may not have been "seen" by the system in a projection direction along or at least tangential to the respective border or border portions. Reconstruction of these border portions is error prone and therefore a reconstruced image may incorrectly represent certain features including but not limited to tissue transitions.

In embodiments, the limited angle scan defines an angular range for the projection directions of the collected projection data, wherein the visualizer is configured to generate, for display on the, or a, display device, a visual indicator indicative of the said range or of a complement of the said range.

In embodiments, the input image is displayed on the display device together with the visual indicator, wherein the input image corresponds to a viewing direction and wherein the visual indicator is adapted based on the viewing direction.

The directional indictor is advantageous when the above mentioned directional analysis of the direction analyzer cannot be performed because certain borders ("edges") are not recorded in the image in suitable contrast, such as borders between types of soft tissue. In addition, the directional indicator indicates which borders of anatomical structures might be missing because these were not extrapolated at all due to the missing projections in the limited angle scan.

The directional indicator is preferably used in conjunction with the confidence map, but each may be used without the other in embodiments.

In another aspect there is provided an X-ray imaging arrangement including an apparatus and an image processing system as per any one of the above mentioned embodiments.

In another aspect there is provided an image processing method, according to claim 10.

In embodiments, the image processing method comprises:
displaying on a display device a visual indicator of an angular range, the said angular range being the range of different projection directions of projection data collected in a limited angle scan by an X-ray imaging apparatus, or being the complement of the said range.

In another aspect there is provided a computer program element, which, when being executed by at least one processing unit, is adapted to cause the processing unit to perform the method as per any one of the above mentioned embodiments.

In another aspect still, there is provided a computer readable medium according to claim 12 and a computer program element according to claim 11.

### Definitions

*"user"* relates to a person, such as medical personnel or other, operating the imaging apparatus or overseeing the imaging procedure. In other words, the user is in general not the patient.

*"object"* is used herein in the general sense to include animate "objects" such as a a human or animal patient, or anatomic parts thereof but also includes inanimate objects such as an item of baggage in security checks or a product in non-destructive testing. However, the proposed system will be discussed herein with main reference to the medical field, so we will be referring to the "object" as "the patient" and the location of interest ROI, being a particular anatomy or group of anatomies of the patient.

In general, the *"machine learning component"* is a computerized arrangement that implements a machine learning ("ML") algorithm that is configured to perform a task. In an ML algorithm, task performance improves measurably after having provided the arrangement with more training data. The task's performance may be measured by objective tests when feeding the system with test data. The task's performance may be defined in terms of a certain error rate to be achieved for the given test data. See for example, T. M. Mitchell, "Machine Learning", page 2, section 1.1, McGraw-Hill, 1997.

### BRIEF DESCRIPTION OF THE DRAWINGS

Exemplary embodiments of the invention will now be described with reference to the following drawings, which are not to scale, wherein:
Fig. 1 shows a schematic block diagram of an imaging arrangement;
Fig. 2 shows an illustration of a limited angle tomographic scan;
Fig. 3 shows an illustration of directional components of border regions in a reconstruction plane;
Fig. 4 shows a block diagram of an image processing system according to one embodiment;
Fig. 5 shows embodiments of a confidence map produced by the imaging processing system in Fig. 4;
Fig. 6 shows an embodiment of a visual indicator for indicating missing projection directions in a limited angle scan; and
Fig. 7 shows a flow chart of an image processing method according to embodiments.

### DETAILED DESCRIPTION OF EMBODIMENTS

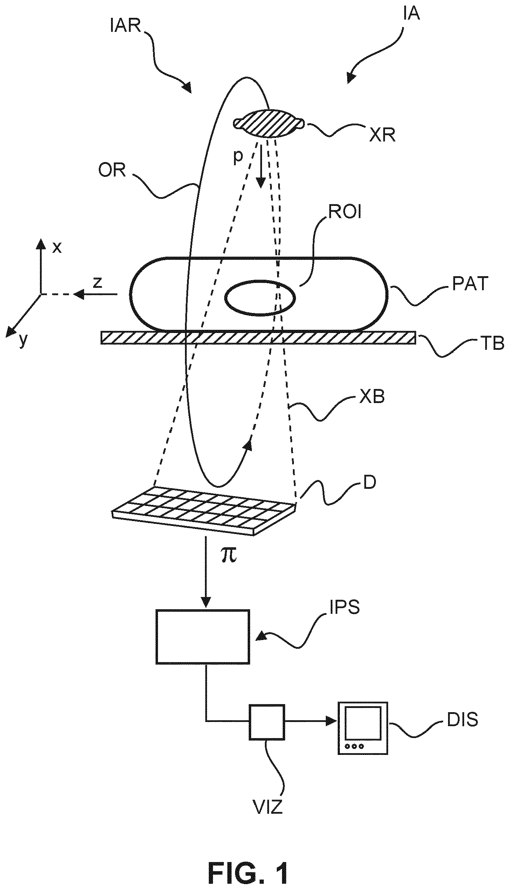

With reference to Fig. 1 there is shown an imaging arrangement IAR envisaged herein in embodiments.

The imaging arrangement IAR includes an imaging apparatus IA that is configured to acquire images of an object PAT such as a human or animal patient.

The images acquired by the imaging apparatus, or imagery derivable therefrom, may be processed by a computerized image processing system IPS to produce enhanced imagery as explained in more detail below.

The enhanced imagery may be stored in memory, such as in a data base system, or may be visualized by a visualizer VIS on a display device DIS, or may be otherwise processed.

The imaging apparatus IA ("imager") envisaged herein is in particular of the tomographic type.

In this type of imaging, projection images are acquired by the imager of a region of interest ROI of patient PAT. The projection images may then be re-constructed by a re-constructor RECON into axial or cross-sectional images or "slices". The axial imagery may reveal information about internal structures of the ROI to inform examination and diagnosis by clinicians in line with clinical goals or objectives to be achieved. Particularly envisaged herein are X-ray based imagers, such as computed tomography (CT) scanners, or C-arm/U-arm imagers, mobile, or fixedly mounted in an operating theatre. The imager IA includes an X-ray source XR and an X-ray sensitive detector D. The imager IA may be configured for energy integrating imaging or for spectral, energy discriminating, imaging. Accordingly, the detector D may be of the energy integrating-type, or of the energy discriminating type, such as a photon-counting detector.

During image acquisition, patient PAT resides in an examination region between the source XR and detector D. In embodiments, the source X-ray moves in an imaging orbit OR in a rotation plane around an imaging axis Z. The imaging axis passes through the ROI. Preferably, the patient's longitudinal axis is aligned with the imaging axis Z, but other arrangements and geometries are also envisaged. The following discussion of angular ranges is based on parallel beam CT geometry, but an extension to divergent beam geometry (i.e., fan beam geometry) is readily understood by those skilled in the art and such divergent geometries are envisaged herein in embodiments. An orbit OR with a rotation of the source XR around the ROI in an arc of at least 180° constitutes a full scan. However, often times only a limited angle scan is performed due to time or space constraints or other. In such as limited angle scan as mainly envisaged herein, the scan orbit subtends a rotation angle of less than 180°, such as for example 160°, 140°, 120, or less, or more. Any range less than 180° is envisaged.

In preferred embodiments herein, a cone beam geometry is used where rays of the beam XB are divergent although parallel-beam geometry beams are not excluded herein in alternative embodiments.

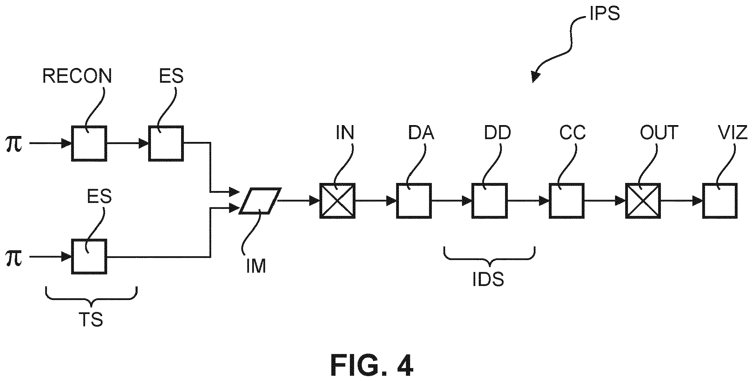

During the rotation, the source XR emanates an X-ray beam XB and irradiates the ROI. During the rotation, the projection images are acquired at the detector D from different directions *p*. The X-ray beam XB passes along the different directions through the patient PAT, particularly through the region of interest ROI. The X-ray beam interacts with matter in the region of interest. The interaction causes the beam XB to be modified. Modified radiation emerges at the far end of the patient and then impinges on the X-ray sensitive detector D. Circuitry in the detector converts the modified radiation into electrical signals. The electrical signals may then be amplified or otherwise conditioned and are then digitized to obtain the (digital) projection imagery π which may then be reconstructed into the axial imagery by a reconstructor RECON (not shown in Fig. 1, but shown in Fig 4).

The re-constructor RECON is a computer implemented module that runs a reconstruction algorithm, such as FBP, Fourier-domain based, ART, iterative, or other. The re-constructor RECON module may be arranged in hardware or software or both. The re-constructor RECON transforms the projection images acquired in the projection domain of the detector D into axial or sectional imagery in image domain. Image domain occupies the portion of space in the examination region where the patient resides during the imaging. In contrast, the projection domain is located in the plane of the X-ray detector D. In the image domain, the re-constructed imagery is defined in cross sectional planes parallel to the rotation plane of the orbit OR and perpendicular to the imaging axis Z. Either by using an x-ray beam XB with a wide cone-angle in z-direction or by advancing the support table TB on which patient PAT resides during imaging, different axial images in different cross sectional planes can be acquired, that together form a 3D image volume, a 3D image representation of the ROI.

Different spatial views on and through the volume can be realized by using a reformatting tool (not shown). The reformatting tool computes views in planes perpendicular to a view axis other than the Z axis. Views along Z direction are referred to herein as "standard views", but this is conventional. The view axis can be chosen by the user. Views on curved surfaces may also be computed by the reformatting tool. After reformatting, visualizer VIZ may be used to have the (possibly) reformatted slice imagery displayed on the display device DIS.

If a limited angle scan is performed as mainly envisaged herein, the above mentioned "classical" reconstruction will include limited angle artifacts due to the limited availability of spatial information in the limited angle ("LA") scan as opposed to a full scan. To alleviate this, the RECON may be modified by suitable regularization to account to some extent for the lack of spatial information of the LA scan. Instead of or in addition to classical reconstruction (with or without LA-regularization), a machine learning ("ML"-) based estimator module ES can be used to either perform the whole reconstruction on its own or in conjunction with a classical reconstruction. The estimator module ES was pre-trained on a corpus of training images. In an example, the estimator module ES comprises a pre-trained convolutional neural network (CNN).

The estimator ES may be used as a second-stage correction downstream the reconstructor RECON. The ES operates on a first version of the reconstruction as output by the reconstructor RECON. This first version image may be referred to herein as the intermediate reconstruction IM', likely marred by LA-artifacts. The estimator module ES takes IM' as an input and attempts to remove in particular LA-artifacts and outputs a final reconstruction IM'.

In embodiments envisaged herein, the estimator module ES is used based on a statistical model and/or on a pre-trained machine learning component to estimate, from the limited-angle construction, an estimate for a full re-construction. The machine learning component as used herein is pre-trained by training data that includes pairs of associated full view and limited angle reconstructions as "targets" of the same region.

For instance, training data for correcting LA-artefacts is generated by acquiring image data over an angular range of 180 degrees (plus fan angle), and generating a "full view" 180-degree reconstruction from said image data. Then, the angular range of the acquired dataset is reduced to a "limited" view range of, for example, 140 degrees, and a "limited angle" 140-degree reconstruction is generated from the reduced image data set.

A convolutional neural network (CNN) in the estimator module ES may then be trained to estimate LA artifacts in the limited angle reconstructions by providing the CNN with the full view reconstructions as a ground truth. After training, the CNN is able to estimate LA artifacts in limited angle reconstructions without knowing a ground truth, and correct LA artifacts that may be present in such reconstructions for example by means of substraction.

In a further example, the CNN in the estimator module ES may be configured to perform metal artifact (MA) correction in addition to the correction of LA artifacts.

Metal artifacts are artifacts be caused by metal objects, for example in orthopedic interventions, which objects may lead to strong beam hardening or even photon starvation in acquired X-ray projection images. Known MA correction involves for example using a 2-pass reconstruction algorithm, which is computationally expensive.

In an embodiment, such known MA correction algorithm may be applied on the full view reconstructions generated in the training phase. As a result, the CNN of the estimator module ES learns to not only estimate limited angle artifacts, but to estimate metal artefacts simultaneously. Thus, LA and MA correction may be carried out at the same time without a corresponding increase in computation time as compared to LA correction alone.

The required training imagery can be collected and assembled from existing historical imagery. After training, the MLC is then able to analyze new imagery, not previously processed, to make accurate estimations. The limited angle training data may be readily generated from existing full scan projections by simply leaving out certain ranges, to so generate "artificial" LS reconstructions. In embodiments, the ML model may include neural networks, support vector machines, decision trees, statistical regression or classification schemes or others. The neural-network models include in particular convolutional neural networks (CNN") with one but preferably two or more hidden layers. The layers are suitably dimensioned to receive the training input images and to be able to output training output images as estimates for the targets. Parameters of the neural network may be adapted in an iterative optimization scheme based on the training data. Suitable optimization schemes include forward-backward propagation or other gradient based methods.

The reconstruction algorithm as used by the reconstructor RECON is "classical" (and will be referred to herein as such) as compared to the algorithm implemented by the estimator ES, in that the latter is trained on training data. More particularly, estimator ES implements a model trained on previous training images. The classical reconstructor RECON is generally based on analytical methods such as the Radon transform or Fourier transform. FBP is one example of a classical reconstruction, but classical reconstruction also includes iterative or algebraic (ART) reconstruction. The operation of both, the estimator ES and the classical reconstructor RECON may be referred to herein as a "reconstruction". To distinguish the two, operation of the reconstructor RECON may be referred to herein as classical reconstruction and that of the estimator ES as ML or iterative-reconstruction.

Broadly the image processing system IPS, as proposed herein is configured to produce a limited angular reconstruction IM by using a re-constructer and/or the machine learning (or statistical model) based estimator module ES. The imaging processing system as proposed herein is configured to produce a confidence map that can be displayed on its own or, preferably, in conjunction concurrently with the limited angle reconstruction image IM to indicate to the user areas of uncertainty that may not have been correctly reconstructed. The areas of uncertainty may have required a greater amount of extrapolation caused by the lack of spatial information due to incomplete projection data collected in the limited angle scan.

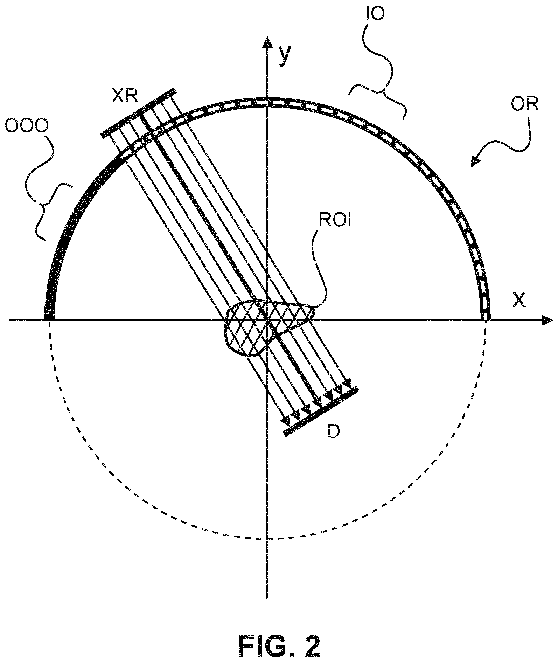

The concept of limited angle tomography is illustrated in Fig. 2 at the example of a beam in parallel geometry. Other beam geometries, in particular divergent ones, are also envisaged herein. Fig. 2 confers a view along the imaging axis Z on the imaging domain for a given slice image plane. For full reconstruction, projection images from different directions on an arc subtending at least *180⁰* are required. Such a full view orbit OR is shown in solid line. In contrast, an exemplary limited angle orbit OR of less than *180°* is shown in dotted line.

Limited angle reconstruction, uses projection imagery from directions *p* that subtend an arc of less than 180⁰ around the ROI. In the limited angle reconstruction fewer projection images are used than in the full reconstruction. This lack of spatial information leads to certain image artifacts ("LA-artifacts").

With continued reference to Fig. 2, it will be appreciated that the limited angle reconstruction algorithm does not necessarily rely on a contiguous sub-arc. It is sufficient for the present definition of limited angle construction to rely on a sub-set from the originally collected set in the scan, whether or not the acquisition locations on the arc are arranged contiguously (ignoring the incremental step width) along the scan arc OR. In other words, arrangements of arcs OR with gaps in between sub-arcs are also envisaged herein and indeed this may be the case during cardiac imaging where the selected projection imagery corresponds to stationary cardiac phases and hence do not necessarily form a contiguous sub-arc (in dotted line), unlike the situation schematically suggested in Fig. 2. However, the sum of the angular coverage of the sub-arcs is in general less than 180° in the limited-angle orbit OR. However, even if the sum of the angular sub-range is at least 180°, limited angle can still occur, namely in case of redundancy such as if some angular sub-regions are overlapping.

For the definition of the angular range of the scan arc OR, the direction of the center ray *p* (shown in bold in Fig. 2) for each focal spot position in the orbit may be used. The range swept out by the center range is then less than 180°in limited angle tomographic scans as envisaged herein. If a divergent beam geometry is used, such as a fan or cone beam, the fan angle is excluded herein. That is, although in such divergent beam geometries the total range swept out by the beams may be more than 180° because of the fan angle, such a scan still counts as a limited angle scan for present purposes.

The projection directions covered by the scan orbit may be referred to herein being part of the in-orbit ("IO")-range. The angular complement of the orbit-range in the 180° semicircle will be referred to herein as the out-of-orbit ("OOO")-range. In other words, the OOO-range includes all projection directions (up to the completing semi-circle) that have not been visited or covered in the scan. This may be summarized algebraically as OOO+IO= 180°.

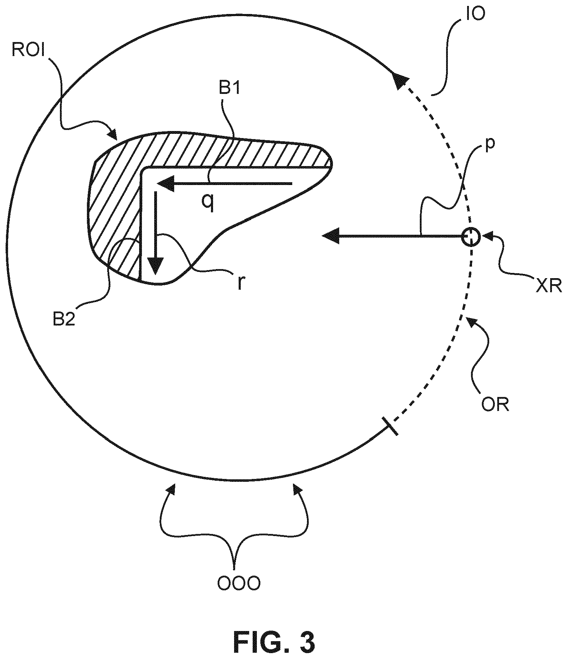

Reference is now made to Fig. 3 that illustrates the above mentioned areas of uncertainty in limited angle reconstruction. Fig. 3 illustrates in a similar geometry as Fig. 2 a boundary comprising parts B1 and B2 of boundary in a region of interest. The boundary B1, B2 may be indicative of a transition between different tissue types: one part of the boundary B1 has a direction *q* that corresponds to a projection direction *p* in the limited angle orbit OR. Said differently, when the X-ray source is positioned as shown in Fig. 3, the projection direction *p* is parallel to the direction *q* of border portion P1. If there is such an alignment between projection direction and a direction component of the border B1, then a correct reconstruction for the respective portion B1 or region around it may be achievable. In contrast, another border portion B2 has a direction r that is not parallel to any projection direction in the given limited angle orbit OR. This means that the region where border portion B2 runs is likely not to be correctly re-constructible because there is insufficient spatial information collected in the limited angle arc OR. The direction *q* may be said to be not in alignment, or "critically aligned", with the projection direction *p*. The border region B2 represents an example of the earlier mentioned "area of uncertainty". The proposed image processor IPS is configured to find and indicate such areas of uncertainty. It will be understood that Fig 3 is merely an illustrative example. Border portions B1,B2 are in general curved and the above explanation applies equally to local parallelism with projection directions in terms of local tangents.

Reference is now made to the block diagram in Fig. 4, which shows the discussed image processing system IPS in more detail.

Projection imagery π, preferably acquired during a limited angle scan orbit (as explained in Fig 2) of the ROI, is received at an input interface IN.

The projection data may have been acquired by a conventional, polychromatic energy integrating imager IA. Alternatively, the imager IA is configured for spectral imaging, including, but not limited to, having a dual-layer detector sub-system D that separates the X-ray flux at the detector into two levels of energy. Alternatively, a photon-counting detector sub-system is used. In yet other embodiments, phase contrast X-ray imaging is used.

Broadly, the imaging processing system comprises in embodiments two stages, an image transformation stage TS and an image domain stage IDS. In the image transformation stage the projection imagery collected in the limited angle scan is transformed into a reconstruction (image) IM, which will be referred to as the input image. The input image IM is a limited angle reconstruction that has been produced by the transformation stage TS from the projection data. Different embodiments are envisaged for the transformation stage as shown in Fig. 4.

In one embodiment, and as preferred herein, there is first a classical reconstruction scheme RECON applied to the projection image π, possibly including additional regularization to account for the limited angle geometry, to produce a first version of a limited angle reconstruction R(π) (not shown). This version R(π) is likely marred with limited angle artifacts. This first version R(π) is then processed by the estimator ES into an improved reconstruction, that is, the input image IM. As mentioned, the estimator ES may be implemented as a machine learning algorithm, for instance neural-network based or other.

Alternatively, the classical reconstruction can be skipped entirely and the machine learning based estimator ES can operate directly on the projection images π to produce the limited angular reconstruction IM. As a further alternative, the machine learning module ES can be skipped and the input image is then obtained solely by operation of the classical reconstructor RECON which may include the above mentioned LA-regularization. Whichever of the embodiments of the transformation stage TS is used, the input image IM is passed on the image domain stage IDS. In the image domain stage IDS, a confidence map CM is constructed as will be explained below more fully. The confidence map CM can be displayed on its own or alongside the reconstruction IM to indicate the regions of uncertainty that are caused by the misalignment of boundaries in the input image IM with the projection directions as explained above in Fig. 3.

In more detail, the image domain stage IDS includes a directional analyzer DA whose output, directional components in the input image IM, is passed on to a directional discriminator DD. The directional discriminator DD supplies information on the critically aligned boundaries or border regions B2 to a confidence image constructor CC to construct the map CM. The confidence map CM may then be passed on through output OUT to a visualizer VIZ to be rendered for display such as by color coding or grey value coding or otherwise. Alternatively, the confidence map is not necessarily displayed but is passed on for statistical analysis or for any other processing that does not necessarily require displaying.

It will be understood that the confidence map CM is not necessarily produced for the entire reconstructed image IM but may only be produced for a part thereof. In embodiments, a segmentation is first run on the input image IM to exclude background areas or other areas not of interest. The confidence map CM is then constructed only for the segmented non-background area.

The direction analysis by the direction analyzer DA may be done with an edge filter. Optionally, prior to the edge filtering, there is a smoothing filter stage such as Gaussian kernel (not shown) to remove noise contribution.

The direction analyzer DA as mentioned above produces a "directional image" map where for at least part of the voxels of the input image IM a directional component at the respective position in the image IM is encoded. In an example, each voxel of the directional image quantifies the direction of the tangent line (or tangent plane in 3D) of the part of the edge that passes through the respective voxel in the input image. The direction component may be suitably encoded. For instance, the voxel in the directional image may correspond to the tangent value of the angle of the tangent line at that point or may correspond to the direction cosines of the tangent line.

The direction discriminator DD then checks whether for each considered voxel in the directional image (which may or may not include the whole of the image IM), its respective directional component falls within a predetermined range, such as the IO range.

The discrimination can be done in any suitable way. For instance, image locations (voxels) with direction components in the IO-range may be flagged up in the input image IM. Preferably however, it is voxels having a tangent in the OOO-range that are identified and suitably flagged up. In that example, border regions of uncertainty as described above may be discriminated. The flags may be stored in an associated matrix structure such as a bit mask.

In more detail, the direction analyzer DA may use an edge filter such as a Sobel-kernel or other, to detect edges in the input images IM. The output of such a filter includes the direction image as mentioned, and, optionally, a strength image. The direction image indicates for each voxel in image IM the direction of the local gradient at that voxel. The directional component of interest is the course of the edge or, said differently, the tangential direction of the edge, and this tangential direction is perpendicular to the local gradient. The strength image indicates the magnitude of the gradient per voxel in the input image IM. Thresholding based on a fixed or user-definable threshold may be done to exclude edge points that have directional components with magnitude below that threshold. Such edge points may be referred to herein as negligible edge points. This thresholding allows reducing the computational burden on direction discriminator DD and the map constructor CC as only a sub-set of edge points will be considered further.

The discriminator DD distinguishes the edge points based on whether their directional component is in-orbit or OOO using the instant orbit range. The instant orbit range OR, and hence the OOO and IO ranges, can be requested from storage in the operator console OC for example, or may be read-out from header data in the input image IM for example, if the image IM is supplied in DICOM format. The edge points in processed image IM may hence be referred to as IO-edge points if their directional component is within the IO-range, or as OOO-edge points otherwise. Before the direction discriminator DD operates, it must be ensured that the reference direction, against which the projection directions in the swept out orbit OR are measured, is aligned with a reference direction of the directional components as output by the directional analyzer DA. A corresponding transformation such as a rotation may be required for this alignment.

The map constructor CC uses the discriminated direction components to construct the map CM. In maps CM according to some embodiments, each non-edge point is assigned a transparent value by the map constructor CC, and so is each negligible edge point in case a thresholding is done as mentioned above. Furthermore, IO edge points are assigned transparent values in embodiments. Only the OOO-edge points are flagged up visually by per voxel MK2 markers in color or grey value encoding. In addition or instead, area-wise markers MK2 may be assigned. Area-wise markers (as opposed to voxel-wise markers MMK1) are configured in shape and size to circumscribe sub-sets of OOO-edge points.

A confidence map CM as per each of the described embodiments may then be superimposed by visualizer VIZ on input image this leaving only the OOO-edge points marked up. A "dual version" of such a CM may be produced in addition or instead, where only the IO-edge points are marked up, although this is less preferable, as in general there are fewer OOO-points expected than IO-points.

In one embodiment the confidence map CM is constructed as follows: a Gaussian kernel is issued to smooth image IM. The direction analyzer DA may implement an edge filter kernel by calculating local gradients in horizontal (eg, Y) and vertical (eg, *X*) direction by taking central differences for some or all voxel positions in image IM. The direction analyzer DA then calculates from these local gradients a local strength of the boundaries to form the strength image and the directional image including measurements with local orientations of boundaries. Since the IO and OOO ranges are known, the discriminator DD can decide by directional comparison, which boundaries are correctly reconstructed and which may be not. The directional image can be used to down-weight these boundaries in the strength image. Thus, the weighted strength image contains only boundaries which might have be wrongly extrapolated in the transformer stage TS. The so weighted strength image may be output as the confidence map CM in embodiments.

The IPS may be arranged in hardware or software. Some or all components may reside in a central memory MEM. The image processing system IPS may be implemented by a suitably arranged computational processing unit PU. Specifically, the IPS may be integrated in the operator console or may be integrated into a work-station associated with the imager XI. Alternatively, in a Cloud architecture, all or some of the IPS components may be implemented across one or more servers. Some or all the IPS components may also be held in a central or distributed memory. If a neural network ("NN") architecture is used for the machine learning component ES, as is indeed envisaged herein in embodiments, advantageously a multi-core processor PU and/or one that is configured for parallel computing may be used such as GPUs or TPUs.

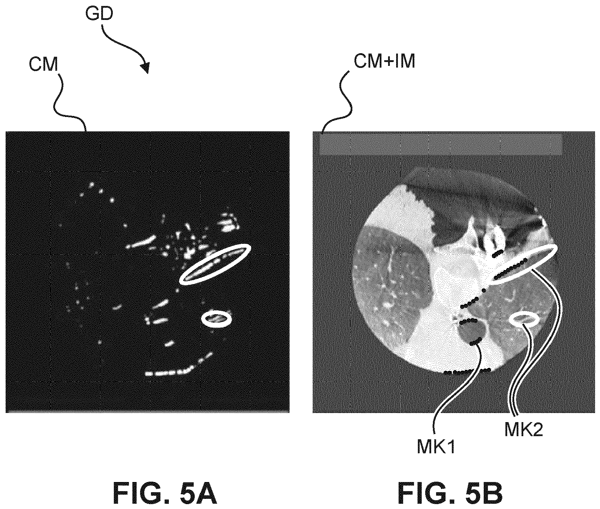

In Figs 5A, B illustrate graphics displays GD that include a confidence map CM as constructed by the map constructor CC in embodiments.

Fig. 5A illustrates the confidence map CM on its own in isolation from input image IM. Light regions correspond to points with tangents in the non-visited range OOO. Those are the points that were extrapolated by the estimator ES or reconstructor RECON and hence are more error prone to artifacts.

Fig. 5B shows a combined image CM+IM where the confidence map is overlaid onto the reconstructed image IM. In the example of Fig. 5B only voxels MK1 with OOO-range tangents are indicated such as by color coding, grey value coding or by any other graphical markup. The remainder of the map CM is transparent so that the user can view the original image information in the reconstructed image IM.

In addition, or instead, of point-wise indication MK1, there may be other marker(s) MK2 in the form of ellipsis (or ellipsoids in 3D), squares or others that merely outline the portion of the image that includes voxels with tangents in the OOO range (also referred to herein as "OOO-tangents"). For comparison, Fig 5C is a ground truth image.

The above described operation of the image processor for constructing the confidence map relies on the assumption that border portions B 1, B2 can actually be detected in the image as edges by a filter of the directional analyzer DA. However, such a detection may not necessarily be possible. In some instances, edges B 1, B2 cannot be identified by the direction analyzer DA and then no confidence map can be constructed for the respective portions. This may happen for borders B 1, B2 between types of soft tissue. Therefore, to address this edge invisibility problem, a further indicator S is constructed by the proposed visualizer VS in cooperation with the directional analyzer DA. Furthermore, the indicator S allows a user to quickly ascertain regions where certain boundaries may have not been extrapolated by the estimator ES at all due to the missing range OOO, even in cases of sufficiently contrasted tissue-type interfaces. The directional indicator S is indicative of the directions in the OOO-range, which directly corresponds to the orientation of possibly missing (i.e., not extrapolated) boundaries in the anatomy ROI.

The standard view in which the image IM, and hence the confidence map CM, is displayed is usually along the Z direction, the Z axis being perpendicular to the rotation plane. However, reformatting as mentioned above can be used to request rendering of the cross sectional imagery IM along different viewing directions. If this happens, the directional indicator S is suitably co-transformed. The directional indicator S may be rendered in 3D and "rotated" accordingly so as to be adapted to a newly requested view in 3D. The user can hence directly and intuitively ascertain which angles are missing and which portions of the image may not have been correctly extrapolated.

The indicator S may be adapted to the new viewing plane by projection of the indicator S in standard view (along axis Z) onto the new plane. In particular, lines with directions in OOO-range are projected onto the new viewing plane. The indicator S may hence be subjected to perspective distortion and/or its in-image position may change when image IM is rendered into the viewing direction as compared to the in-image position in standard view.

In this embodiment, the visualizer VIZ includes a geometric transformer coupled to an event handler. The event handler registers when the user requests a certain viewing direction for the reconstruction IM. Once the new viewing direction is recognized, the OOO-range indicator S is accordingly projected on the new viewing plane. The necessary geometric transformation is performed by the geometric transformer of the visualizer VR that receives an indication of the OOO- range from the directional analyzer DA. In other words, a real time dynamic adaptation of the visual indicator S is envisaged herein.

The reconstructed imagery corresponds to a 3D volume and a rendering along the newly requested viewing direction, other than along standard direction Z, can be obtained by any suitable 3D rendering technique such as MIP (maximum intensity projection) or other reformatting algorithms. The confidence map CM are associated with respective points in the standard volume and are automatically co-rendered or co-formatted when image IM is rendered or formatted for display so that no dedicated projection is required.

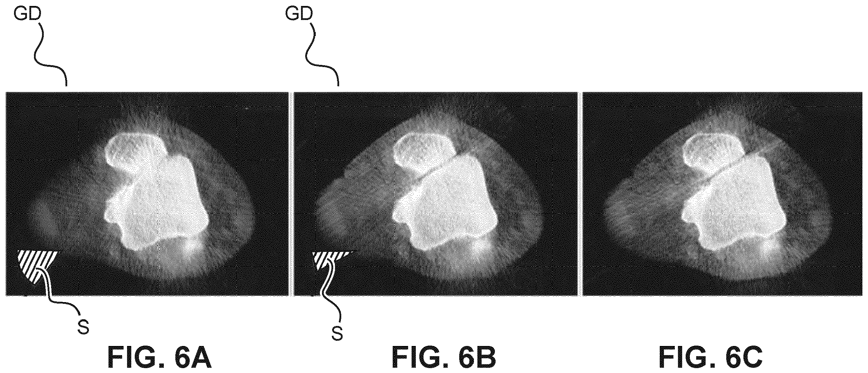

An embodiment of a visualization of the OOO-range indicator S is illustrated in Fig. 6A, B. In the shown embodiment, the indicator S is visualized as a sector of a circle or ellipse, possibly color coded or grey value encoded. The opening angle of the sector corresponds to the range of angles in the OOO-range. The indicator S thus visually indicates the orientation of possibly missing or incorrectly reconstructed boundaries in the anatomy ROI. Fig 6A shows a 140⁰ acquisition and thus the OOO indicator S corresponds to about 40⁰. In Fig. 6B a 160⁰ acquisition is shown with indicator S indicating an OOO-range of 20⁰.

Other embodiments of the directional indicator S are also envisaged. In one embodiment, the indicator S is rendered as a bundle of arrows indicating the OOO-range. In one embodiment, only a representative direction of the missing range OOO is shown such as the direction of a center ray of the OOO-range. In general, any configuration for the indicator S is envisaged that is capable of indicating, preferably graphically, some or all directions in the OOO-range. However, the indicator S may not necessarily be graphic but may include instead the OOO-range as purely textual information in a text box for example. Such textual information may be combined with any of the mentioned graphical embodiments of indicator S.

Although in Figs 6A,B the directional indicator S is shown as a single element, this may not necessary be so in all embodiments. For instance, when the OOO-range is not contiguous, the indicator S may comprise a plurality of sub-elements, accordingly spatially distributed as discrete elements, to each indicate a respective partial range of the OOO-range.

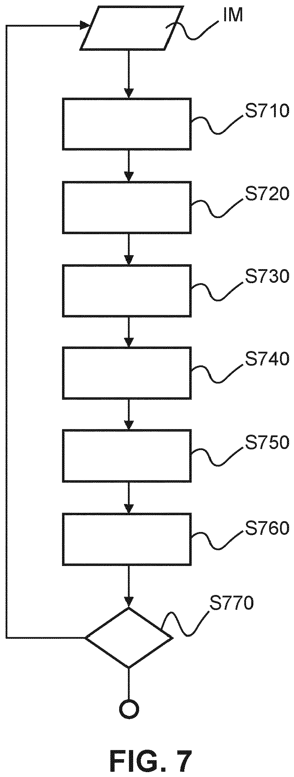

Reference is now made to Fig. 7, which is a flow chart indicating computer implemented steps that may be used to implement at least a part of the described image processing system IPS. However, it will be understood that the following described computer-implemented method may also be understood as a teaching in its own right and are not necessarily tied to the image processing system IPS as described above.

It will also be understood that the steps pertaining to the reconstruction and the estimation by the machine learning component in image transformer stage TS and steps performed by the IDS stage for computing the confidence map or the directional indicator S are not necessarily integrated into the same functional unit. The proposed second stage IDS is a standalone component that may be used as an add-on second-stage with any image reconstruction stage. It will also be understood that the two visualizations proposed herein, namely the confidence map and the directional indicator S could each be used on their own (one without other), but may preferably be used in combination.

At an initial, optional, step projection data in a limited angle scan is collected and reconstructed into a limited angle reconstruction image IM. The reconstruction operation may be done purely by a classical reconstruction algorithm. Preferably however, the reconstruction image IM is obtained by using a classical reconstruction to produce an intermediate reconstruction image IM'. In addition, a machine learning algorithm (suitably trained on training data) is used to correct the intermediate reconstruction image IM' for limited angle artifacts to produce the reconstruction image IM. In a further embodiment, no classical reconstruction algorithm is used but it is only a statistical or machine learning based algorithm that is used to directly estimate the reconstruction image IM from the projection data collected in the limited angle scan.

At step S710 the reconstructed input image IM is received, based on projection data collected in the limited angle scan. The limited angle scan comprises a number of different projection directions along which the projection data has been collected. This range defines the range of visited directions (in-orbit) "IO" as opposed to the complement thereto, the range of direction that have not been visited in the LA orbit, the out-of-orbit ("OOO")-range.

At step S720 direction components are computed for at least part of the voxels in the input image. The computed directional components at respective positions in the input image are encoded in a directional image or directional image map. In an example, the direction components are computed as tangent lines, in particular, an orientation of the tangent lines relative to a reference direction.

At step S730 border regions are discriminated by checking, for each considered voxel, whether or not its direction component as computed in step S720 is among the projection directions IO visited during the LA scan.

At step S740, a confidence map is constructed. The confidence map indicates for each considered voxel in the input image (thus, preferably, a sub-set of voxels the input image) whether the directional component as found in step S730 is or is not within the visited range IO of the limited angle scan orbit OR. Preferably the points whose directional components are not among the range of the visited projection directions IO are so indicated. However, a dual map where the indications are reversed is also envisaged and may be used in alternative embodiments. In such a dual map, it is the voxels with directional components in the IO-range that are indicated.

At step S750 the so constructed confidence map is then displayed on the display device. The confidence map may be displayed on its own or may be displayed concurrently with the input image IM, preferably superimposed thereon so as to intuitively show to the user which portions of the input image correspond to areas of uncertainty.

The indication by the confidence map may be voxel-wise markers MK1or may be by region-wise markers MK2 as exemplary shown in Fig. 5 above.

In addition, or instead of step S750, a directional indicator S is visualized in relation to the displayed image IM. The directional indicator furnishes an indication of the non-visited range OOO of directions.

In step S760 the directional indicator S adapted to a viewing direction of the reconstructed image IM as displayed at step S750.

This adaptation is preferably done dynamically and in real time based on whether at step S770 there is a newly requested viewing direction of the input image. If the user does requests a new viewing direction, the above mentioned steps are repeated and the confidence map and the directional indicator S are adapted to new viewing plane through the image volume.

The proposed method may be used in any kind of limited angle reconstruction tasks, including tomosynthesis.

The components of the image processing system IPS may be implemented as software modules or routines in a single software suit and run on a general purpose computing unit PU such as a workstation associated with the imager IM or a server computer associated with a group of imagers IA. Alternatively, the components of the image processing system IPS may be arranged in a distributed architecture and connected in a suitable communication network.

Alternatively, some or all components may be arranged in hardware such as a suitably programmed FPGA (field-programmable-gate-array) or as hardwired IC chip.

One or more features disclosed herein may be configured or implemented as/with circuitry encoded within a computer-readable medium, and/or combinations thereof. Circuitry may include discrete and/or integrated circuitry, application specific integrated circuitry (ASIC), a system-on-a-chip (SOC), and combinations thereof., a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. Image processing system (IPS), comprising:
an input interface (IN) configured to receive an input image (IM) based on projection data (π) collected in a limited angle scan along different projection directions by an imaging apparatus (IA);
a directional analyzer (DA) configured to compute a direction component for at least part of the voxels in the input image and produce a directional image in which computed directional components at respective positions in the input inage are encoded ;
a directional discriminator (DD) configured to check, for each considered voxel, whether its computed directional component is along at least one of the projection directions or not, thereby discriminating border regions ; and
a confidence map constructor (CC) configured to construct a confidence map based on the discriminated border regions.

2. Image processing system of claim 1, comprising a visualizer (VIZ) configured to cause the confidence map to be displayed on a display device (DIS).

3. Image processing system of claim 1 or 2, wherein the confidence map is displayed together with the input image.

4. Image processing system of any one of the previous claims, further comprising an estimator (ES) configured to compute the input image (IM) based on a reconstruction R(π) from the projection data.

5. Image processing system of claim 4, wherein the estimator (ES) is implemented by a machine learning algorithm.

6. Image processing system of claim 5 wherein the estimator (ES) has a convolutional neural network (CNN) architecture.

7. Image processing system of any one of previous claims, wherein the limited angle scan defines an angular range for the projection directions of the projection data (π) collected in the limited angle scan, wherein the visualizer (VIZ) is configured to generate, for display on the, or a, display device (DIS), a visual indicator (S) indicative of the said range or of a complement of the said range.

8. Image processing system of claim 7, wherein the input image is displayed on the display device (DIS) together with the visual indicator (S), wherein the input image corresponds to a viewing direction and wherein the visual indicator (S) is adapted based on the viewing direction.

9. An X-ray imaging arrangement including an apparatus (IA) and a system (IPS) as per any one of the previous claims.

10. Computer-implemented image processing method, comprising:
receiving (S710) an input image (IM) based on projection data (π) collected in a limited angle scan along different projection directions by an imaging apparatus (IA);
computing (S720) a direction component for at least part of the voxels in the input image and producing a directional image in which computed directional components at respective positions in the input inage are encoded; and
discriminating (S730) border regions by checking, for each considered voxel, whether its computed directional component is along at least one of the projection directions, and
constructing (S740) a confidence map based on the discriminated border regions.

11. A computer program element, which, when being executed by at least one processing unit (PU), causes the processing unit (PU) to perform the method as per claim 10.

12. A computer readable medium having stored thereon the program element of claim 11.

## Patentansprüche

1. Bildverarbeitungssystem (IPS), umfassend: eine Eingabeschnittstelle (IN), konfiguriert für den Empfang eines Eingabebildes (IM) auf der Grundlage von Projektionsdaten (π), die in einem Scan mit begrenztem Winkel entlang verschiedener Projektionsrichtungen von einem Bildgebungsgerät (IA) erfasst wurden; ein Richtungsanalysator (DA), der so konfiguriert ist, dass er eine Richtungskomponente für mindestens einen Teil der Voxel im Eingabebild berechnet und ein Richtungsbild erzeugt, in dem berechnete Richtungskomponenten an den jeweiligen Positionen im Eingabebild codiert sind; eine direktionale Unterscheidungs-Vorrichtung (DD), die konfiguriert ist, zu prüfen, ob sich für jedes betrachtete Voxel die berechnete Richtungskomponente entlang mindestens einer der Projektionsrichtungen befindet oder nicht, wodurch die Randbereiche unterschieden werden; und eine Vorrichtung zum Erstellen einer Konfidenz-Landkarte (CG), konfiguriert, um eine Konfidenz-Landkarte aufgrund der unterschiedenen Grenzregionen zu erstellen.

2. Bildverarbeitungssystem nach Anspruch 1, eine Vorrichtung zum Sichtbarmachen (VIZ) umfassend, die so konfiguriert ist, dass die Konfidenz-Landkarte auf einem Anzeigegerät (DIS) angezeigt wird.

3. Bildverarbeitungssystem nach Anspruch 1 oder 2, wobei die Konfidenz-Landkarte zusammen mit dem Eingabebild angezeigt wird.

4. Bildverarbeitungssystem nach einem der vorhergehenden Ansprüche, ferner eine Schätzvorrichtung (ES) umfassend, konfiguriert, um das Eingabebild (IM) aufgrund einer Rekonstruktion R(π) aus den Projektionsdaten zu berechnen.

5. Bildverarbeitungssystem nach Anspruch 4, wobei die Schätzvorrichtung (ES) durch einen Algorithmus für maschinelles Lernen verwirklicht wird.

6. Bildverarbeitungssystem nach Anspruch 5, wobei die Schätzvorrichtung (ES) eine Architektur mit einem Convolutional Neural Network (CNN) aufweist.

7. Bildverarbeitungssystem nach einem der vorhergehenden Ansprüche, wobei die begrenzte Winkelabtastung einen Winkel-Bereich für die Projektionsrichtungen der Projektions-Daten *(π)* definiert, die in der Abtastung mit begrenztem Winkel gesammelt wurden, wobei die Vorrichtung zum Sichtbarmachen (VIZ) so konfiguriert ist, dass sie auf der oder auf einer Anzeige-Vorrichtung (DIS) eine optische Anzeige (S) erzeugt, die den genannten Bereich oder eine Ergänzung des genannten Bereichs anzeigt.

8. Bildverarbeitungssystem nach Anspruch 7, wobei das Eingabebild auf der Anzeigevorrichtung (DIS) zusammen mit dem visuellen Indikator (S) angezeigt wird, wobei das Eingabebild einer Betrachtungsrichtung entspricht und wobei der visuelle Indikator (S) aufgrund der Betrachtungsrichtung angepasst ist.

9. Eine Röntgenbildgebungs-Anordnung mit einem Gerät (IA) und einem System (IPS) gemäß einem der vorhergehenden Ansprüche.

10. Durch Computer verwirklichtes Bildverarbeitungs-Verfahren, das Folgendes umfasst: empfangen (S710) eines Eingabebildes (IM) auf der Grundlage von Projektionsdaten (π), die in einem Scan mit begrenztem Winkel entlang verschiedener Projektionsrichtungen von einem Bildgebungsgerät (IA) erfasst wurden; berechnen (S720) einer Richtungskomponente für mindestens einen Teil der Voxel im Eingabebild und Erzeugen eines Richtungsbildes, in dem berechnete Richtungskomponenten an den jeweiligen Positionen im Eingabebild kodiert sind; und Unterscheidung (S730) von Grenzbereichen, indem für jedes betrachtete Voxel geprüft wird, ob sich die berechnete Richtungskomponente entlang mindestens einer der Projektionsrichtungen befindet, und erstellen (S740) einer Konfidenz-Landkarte aufgrund der unterschiedenen Grenzbereiche.

11. Ein Computerprogrammelement, das, wenn es von mindestens einer Verarbeitungseinheit (PU) ausgeführt wird, bewirkt, dass die Verarbeitungseinheit (PU) das Verfahren nach Anspruch 10 durchführt.

12. Computerlesbares Medium, auf dem das Programm-Element nach Anspruch 11 gespeichert ist.

## Revendications

1. Système de traitement d'images (IPS) comprenant: une interface d'entrée (IN) configurée pour recevoir une image d'entrée (IM) basée sur des données de projection (π) collectées dans un balayage à angle limité le long de différentes directions de projection par un appareil d'imagerie (IA); un analyseur directionnel (DA) configuré pour calculer une composante de direction pour au moins une partie des voxels dans l'image d'entrée et produire une image directionnelle dans laquelle les composantes directionnelles calculées à des positions respectives dans l'image d'entrée sont codées; un discriminateur directionnel (DD) configuré pour vérifier, pour chaque voxel considéré, si sa composante directionnelle calculée est le long d'au moins une des directions de projection ou non, discriminant ainsi les régions frontalières; et un constructeur de carte de confiance (CC) configuré pour construire une carte de confiance sur la base des régions frontalières discriminées.

2. Système de traitement d'images selon la revendication 1, comprenant un visualiseur (VIZ) configuré pour afficher la carte de confiance sur un dispositif d'affichage (DIS).

3. Système de traitement d'images selon la revendication 1 ou 2, dans lequel la carte de confiance est affichée avec l'image d'entrée.

4. Système de traitement d'images selon l'une des revendications précédentes, comprenant en outre un estimateur (ES) configuré pour calculer l'image d'entrée (IM) sur la base d'une reconstruction R(π) à partir des données de projection.

5. Système de traitement d'images selon la revendication 4, dans lequel l'estimateur (ES) est mis en œuvre par un algorithme d'apprentissage automatique.

6. Système de traitement d'images selon la revendication 5, dans lequel l'estimateur (ES) a une architecture de réseau neuronal convolutif (CNN).

7. Système de traitement d'images selon l'une quelconque des revendications précédentes, dans lequel le balayage à angle limité définit une plage angulaire pour les directions de projection des données de projection (n) recueillies dans le balayage à angle limité, dans lequel le visualiseur (VIZ) est configuré pour générer, en vue de son affichage sur le ou un dispositif d'affichage (DIS), un indicateur visuel (S) indiquant ladite plage ou un complément de ladite plage.

8. Système de traitement d'images selon la revendication 7, dans lequel l'image d'entrée est affichée sur le dispositif d'affichage (DIS) avec l'indicateur visuel (S), dans lequel l'image d'entrée correspond à une direction d'observation et dans lequel l'indicateur visuel (S) est adapté en fonction de la direction d'observation.

9. Dispositif d'imagerie à rayons X comprenant un appareil (IA) et un système (IPS) selon l'une quelconque des revendications précédentes.

10. Méthode de traitement d'images mise en œuvre par ordinateur, comprenant les étapes consistant à: recevoir (S710) une image d'entrée (IM) basée sur des données de projection (n) collectées dans un balayage à angle limité le long de différentes directions de projection par un appareil d'imagerie (IA); calculer (S720) une composante de direction pour au moins une partie des voxels dans l'image d'entrée et produire une image directionnelle dans laquelle les composantes directionnelles calculées à des positions respectives dans l'image d'entrée sont codées; et discriminer (S730) les régions frontalières en vérifiant, pour chaque voxel considéré, si sa composante directionnelle calculée se trouve le long d'au moins une des directions de projection, et construire (S740) une carte de confiance basée sur les régions frontalières discriminées.

11. Élément de programme d'ordinateur qui, lorsqu'il est exécuté par au moins une unité de traitement (PU), fait que l'unité de traitement (PU) exécute la méthode selon la revendication 10.

12. Support lisible par ordinateur sur lequel est stocké l'élément de programme de la revendication 11.
